# FASCICULE DE BREVET EUROPEEN

(11) **EP 0 755 775 B1**
(45) Date de publication et mention de la délivrance du brevet: **13.06.2001**
(21) Numéro de dépôt: 95401784.4
(22) Date de dépôt: 27.07.1995
(51) Int. Cl.: B32B 7/08

(54) **Panneau sensiblement rigide thermiquement isolant et procédé pour sa fabrication**
Wahrnehmbar steifes, thermisch isolierendes Paneel, sowie Verfahren zu seiner Herstellung
Substantially rigid, thermally insulating panel and method for its manufacture

(43) Date de publication de la demande: 29.01.1997
(73) Titulaire: ZODIAC INTERNATIONAL, F-92137 Issy Les Moulineaux (FR)
(72) Inventeur: Menendez Gancedo, Valentin, E-17480 Roses (ES)
(74) Mandataire: Gorrée, Jean-Michel

(56) Documents cités:
- EP-A- 0 194 564
- EP-A- 0 526 363
- WO-A-92/03284
- GB-A- 2 075 913
- US-A- 4 230 057
- US-A- 4 502 153
- US-A- 5 080 306
- DATABASE WPI Week 9329 Derwent Publications Ltd., London, GB; AN 93-232873 XP002003336 & JP-A-05 156 543 (TEIJIN LTD)
- DATABASE WPI Week 8844 Derwent Publications Ltd., London, GB; AN 88-310673 XP002003337 & JP-A-63 227 336 (OIKE KOGYO KK)

## Description

La présente invention concerne des perfectionnements apportés aux structures thermiquement isolantes, telles que celles destinées par exemple à constituer des enceintes isothermes.

On connaît actuellement de nombreuses structures thermiquement isolantes permettant de constituer des enceintes isothermes. Toutefois, toutes les enceintes connues présentent l'inconvénient de comporter une structure rigide constituée en métal ou en une matière plastique et elles possèdent donc un poids qui apparaît trop élevé pour certains domaines d'utilisation dans lesquels la recherche d'un poids minimum est un objectif fondamental (enceintes frigorifiques embarquées dans des vaisseaux spatiaux par exemple).

Il existe donc une demande permanente et pressante pour des structures isothermes, destinées notamment à être utilisées dans des conditions dans lesquelles les mouvements de convexion des gaz ne peuvent pas se produire (ambiance agravitationnaire), qui soient au moins aussi efficaces que les structures traditionnelles sur le plan de l'isolation thermique, mais qui présentent en outre un poids considérablement réduit, par exemple au moins cinq fois moindre que les structures les plus légères actuellement connues, réalisées en aluminium.

A ces fins, selon un premier de ses aspects, l'invention propose un panneau rigide thermiquement isolant qui se caractérise essentiellement en ce qu'il est constitué par au moins deux feuilles composites sensiblement souples entretoisées par une multiplicité de brins souples agencés pour que, à l'état gonflé, les deux feuilles composites soient maintenues à distance l'une de l'autre et dans des positions prédéterminées l'une par rapport à l'autre, chaque feuille composite comprenant, du centre vers l'extérieur :
- une couche interne de protection, transparente pour les ondes électromagnétiques, notamment les ondes infra-rouges,
- une feuille mince d'un métal réfléchissant les ondes électromagnétiques, notamment les ondes infra-rouges,
- une couche de protection de la feuille métallique,
- une couche fibreuse assurant la tenue mécanique de la feuille,
- une couche d'un polymère d'enduction assurant l'étanchéité,
- une couche de protection d'une feuille métallique sous-jacente,
- une feuille mince d'un métal réfléchissant les ondes électromagnétiques, notamment les ondes infra-rouges, et
- une couche externe de protection, transparente pour les ondes électromagnétiques, notamment les ondes infra-rouges.

Grâce à la structure précitée, on réalise un panneau composé exclusivement de matériaux très légers, dans lequel les feuilles métalliques constituent une excellente barrière thermique ; la rigidité mécanique est procurée par un gonflage, sous une pression relativement élevée (par exemple de l'ordre de 250 hectopascals), de l'espace libre central traversé par les brins souples et la rigidité d'une telle structure est analogue à celle d'un panneau en un matériau rigide, métal ou matière plastique. Pour ce qui est de la légèreté, on peut noter que, dans un exemple typique de réalisation d'une enceinte thermiquement isolante, le poids est de l'ordre de 5 kg alors qu'une enceinte analogue constituée classiquement en aluminium pèse environ 35 kg.

Avantageusement, pour obtenir une structure ayant une bonne résistance mécanique, les brins souples traversent la couche fibreuse et les extrémités des brins souples sont retenues dans la couche de polymère d'enduction ; de préférence alors, pour réaliser un bon ancrage les brins souples sont constitués par au moins un fil souple continu plié en zig-zag d'une feuille souple à l'autre en formant, de chaque côté, des boucles traversées par des fils de trame, les boucles et les fils de trame étant noyés dans la couche du polymère d'enduction.

De façon pratique, les couches de protection sont constituées en un polyimide, tel que celui commercialisé sous le nom "CAPTON", et/ou le polymère d'enduction est un caoutchouc synthétique thermoplastique, tel que celui commercialisé sous le nom "NEOPRENE". De préférence, la feuille métallique est en aluminium ou en argent. Quant à la couche fibreuse, elle peut être tissée ou non tissée, mais elle est de préférence ignifugée.

Selon un second de ses aspects, l'invention propose également un procédé pour réaliser une structure thermiquement isolante qui comporte plusieurs panneaux inclinés les uns par rapport aux autres pour former une enceinte, fermée ou non, et qui met en oeuvre la constitution exposée plus haut. Ledit procédé se caractérise essentiellement en ce qu'il comprend les étapes suivantes :
- on réalise une première forme à plat de ladite structure, en solidarisant l'une sur l'autre
   . une couche interne de protection transparente pour les ondes électromagnétiques, notamment les ondes infra-rouges,
   . une feuille mince d'un métal réfléchissant les ondes électromagnétiques, notamment les ondes infra-rouges,
   . une couche de protection de la feuille métallique, et
   . une couche fibreuse assurant la tenue mécanique,
- on réalise une seconde forme à plat ayant la même configuration que la première forme, mais en inversant l'ordre des couches,
- on superpose les deux formes à distance l'une de l'autre, les couches internes de protection se faisant face, et on met en place une multiplicité de liens souples entre les deux formes, les liens souples étant retenus au-delà des couches fibreuse assurant la tenue mécanique, en prévoyant des réserves aux emplacements des futures pliures,
- on dépose une couche étanche d'un polymère d'enduction sur chaque couche fibreuse en y noyant les extrémités des susdits liens souples,
- on revêt chaque face d'une couche de protection, puis d'une feuille mince d'un métal réfléchissant les ondes électromagnétiques, notamment les ondes infra-rouges,
- on plie la feuille plane composite ainsi constituée par panneaux et on assemble les bords jointifs desdits panneaux pour constituer une structure intermédiaire, et enfin
- on revêt la structure intermédiaire, intérieurement et extérieurement, de deux couches respectives de protection transparentes pour les ondes électromagnétiques, notamment les ondes infra-rouges.

Pour améliorer la rigidité mécanique de la structure, on peut fixer, ensuite, des renforts d'angle extérieurs et/ou intérieurs.

De préférence, pour réaliser la multiplicité de liens souples, on tisse au moins un fil selon une configuration approximative en zig-zag, en formant au-delà des couches fibreuses des boucles traversées par au moins un fil de trame, les boucles et les fils de trame respectifs étant noyés dans les couches correspondantes de polymère d'enduction.

L'invention sera mieux comprise à la lecture de la description détaillée qui suit de certains exemples de réalisation donnés uniquement à titre non limitatif. Dans cette description, on se réfère au dessin annexé sur lequel:
- la figure 1 est une vue schématique en coupe illustrant la constitution d'un panneau thermiquement isolant constitué conformément à l'invention,
- la figure 2 montre une forme à plat réalisée dans une étape intermédiaire du procédé de l'invention, et
- la figure 3 montre en perspective une enceinte thermiquement isolante obtenue, à partir de formes à plat de la figure 2, au terme du procédé de l'invention.

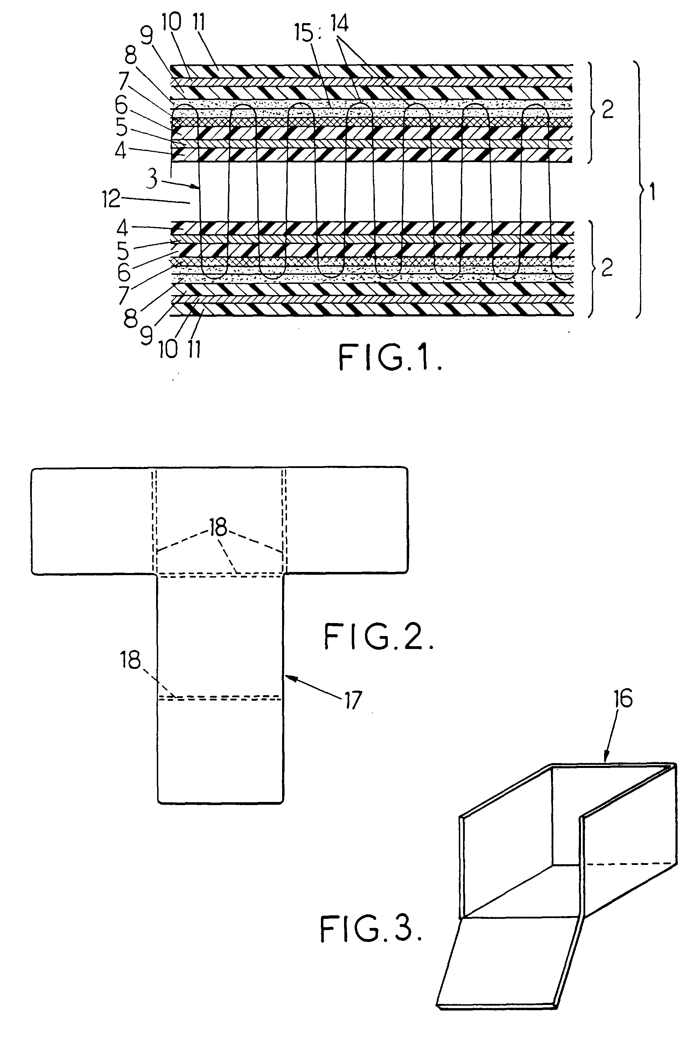

En se référant tout d'abord à la figure 1, un panneau 1 sensiblement rigide, thermiquement isolant, est constitué par deux feuilles composites 2 sensiblement souples entretoisées par une multiplicité de brins souples 3 agencés pour que, à l'état gonflé, les deux feuilles composites 2 soient maintenues dans des positions prédéterminées l'une par rapport à l'autre, notamment soient sensiblement parallèles l'une à l'autre.

Chaque feuille composite 2 comprend, du centre vers l'extérieur :
- une couche interne de protection 4, transparente pour les ondes électromagnétiques, notamment pour les ondes infra-rouges ; cette couche interne peut être constituée en un polyimide, tel que celui disponible dans le commerce sous la dénomination CAPTON ;
- une feuille mince 5 d'un métal, tel que l'aluminium ou l'argent, réfléchissant les ondes électromagnétiques, notamment les ondes infra-rouges ;
- une couche 6 de protection de la feuille métallique 5, la couche de protection 6 pouvant être constituée identiquement à la susdite couche 4 ;
- une couche fibreuse 7 assurant la tenue mécanique de la feuille composite 2, cette couche fibreuse pouvant être tissée ou non tissée, et étant de préférence ignifugée ;
- une couche 8 d'un polymère d'enduction tel qu'un caoutchouc synthétique thermoplastique (par exemple celui disponible dans le commerce sous la dénomination NEOPRENE) assurant l'étanchéité ;
- une couche 9 de protection d'une feuille métallique sous-jacente, cette couche 9 pouvant être constituée identiquement à la susdite couche 6 ;
- une feuille mince 10 en un métal réfléchissant les ondes électromagnétiques, notamment les ondes infra-rouges, et qui peut être constituée identiquement à la susdite feuille métallique 5 ; et
- une couche externe de protection 11, transparente pour les ondes électromagnétiques, notamment les ondes infra-rouges, cette couche pouvant être constituée identiquement à la susdite couche interne 4.

Les brins souples d'entretoisement 3, qui s'étendent en travers de l'espace libre 12 séparant les deux feuilles composites 2, traversent la couche fibreuse 7 et les extrémités desdits brins 3 sont retenues dans la couche 8 de polymère d'enduction. Les brins souples peuvent être constitués par au moins un fil souple continu 13, plié en zig-zag d'une feuille 2 à l'autre alternativement en formant, au sein de chaque feuille 2, des boucles 14 traversées par au moins un fil de trame 15. Les boucles 14 et les fils de trame 15 sont noyés dans la couche de polymère d'enduction 7 et y sont ancrés.

Une fois gonflé par insufflation d'un gaz sous pression (par exemple de l'ordre de 250 hectopascals) dans l'espace intermédiaire 12, on obtient un panneau d'une grande rigidité mécanique, analogue à celle d'un panneau en métal ou en matière plastique, et qui constitue un très bon isolant thermique en raison de la présence des multiples feuilles métalliques et de l'espace intermédiaire. L'utilisation d'un tel panneau dans des conditions agravitationnaires entraîne l'absence de convexion du gaz de remplissage dans l'espace intermédiaire 12 et contribue de la qualité de l'isolation thermique.

Pour réaliser une enceinte isotherme de forme parallélépipèdique telle que l'enceinte cubique 16 montrée à la figure 3 (enceinte ouverte vers le haut et munie d'un couvercle amovible non représenté, la face avant étant rabattable), on peut avoir recours au procédé qui suit et qui peut être mis en oeuvre pour obtenir des enceintes de toute forme souhaitée autre que celle représentée à titre d'exemple purement illustratif.

On réalise tout d'abord une première forme à plat 17 (fig. 2) de la structure souhaitée, en solidarisant l'une sur l'autre après découpe selon le contour voulu:
- la susdite couche interne 4 de protection transparente pour les ondes électromagnétiques, notamment les ondes infra-rouges,
- la susdite feuille mince 5 d'un métal réfléchissant les ondes électro-magnétiques, notamment les ondes infra-rouges,
- la susdite couche 6 de protection de la feuille métallique 5, et
- la susdite couche fibreuse 7 destinée à assurer la tenue mécanique.

On réalise également une seconde forme à plat ayant la même configuration que la première 17, en inversant l'ordre des couches (dans l'exemple représenté à la figure 2, la symétrie des première et seconde formes conduit à réaliser deux formes identiques).

On superpose ensuite les première et seconde formes en les maintenant à distance l'une de l'autre, les deux couches internes 4 respectives se faisant mutuellement face. Puis on dispose une multiplicité de liens souples 3 entre les deux formes, les liens souples 3 étant fixés ou retenus sur ou au-delà de la couche fibreuse 7, en prévoyant des réserves aux emplacements des futures pliures (18) de la structure définitive. Avantageusement et de façon simple, on tisse au moins un fil 13 ou un ensemble de fils 13 selon une configuration en zig-zag, en traversant à chaque fois les couches fibreuses 7 et en formant, au-delà de celle-ci, des boucles 14 traversées par un ou plusieurs fils de trame 15.

On revêt ensuite chaque couche fibreuse 7 d'une couche étanche 8 d'un polymère d'enduction telle que précitée, au sein de laquelle sont noyés les boucles 14 et les fils de trame 15, de sorte que les fils 13, et donc les liens 3, sont ancrés solidement dans lesdites couches 8 après polymérisation.

Après polymérisation des couches 8, on dépose sur chacune d'elle une couche 9 de protection, puis une feuille métallique 10.

On plie alors la feuille plane composite ainsi constituée en suivant les réserves 18 précédemment déterminées, puis on assemble, notamment pas collage, les bords jointifs des panneaux afin d'obtenir une structure intermédiaire ayant la configuration souhaitée.

Finalement, on revêt toutes les faces, intérieures et extérieures, ainsi que les pliures de la structure intermédiaire, d'une couche externe de protection 11 telle que précitée. La structure finale peut être renforcée en mettant en place des renforts d'angles extérieurs et/ou intérieurs.

Le couvercle de la structure 17 de la figure 3 peut être fabriqué, de façon plus simple, selon la même suite d'étapes.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes. En particulier, on comprendra que l'invention n'est pas limitée à la réalisation de panneaux à deux feuilles composites entretoisées, mais peut s'étendre à la réalisation de panneaux comportant une multiplicité de feuilles composites entretoisées, les unes à la suite des autres.

## Revendications

1. Panneau (1) sensiblement rigide thermiquement isolant, caractérisé en ce qu'il est constitué par au moins deux feuilles composites (2) sensiblement souples entretoisées par une multiplicité de brins souples (3) agencés pour que, à l'état gonflé, les deux feuilles composites (2) soient maintenues à distance l'une de l'autre et dans des positions prédéterminées l'une par rapport à l'autre, chaque feuille composite (2) comprenant, du centre vers l'extérieur:
- une couche interne de protection (4), transparente pour les ondes électromagnétiques, notamment les ondes infra-rouges,
- une feuille mince (5) d'un métal réfléchissant les ondes électromagnétiques, notamment les ondes infra-rouges, et
- une couche (6) de protection de la feuille métallique,
- une couche fibreuse (7) assurant la tenue mécanique de la feuille,
- une couche (8) d'un polymère d'enduction assurant l'étanchéité,
- une couche (9) de protection d'une feuille métallique sous-jacente,
- une feuille mince (10) d'un métal réfléchissant les ondes électromagnétiques, notamment les ondes infra-rouges, et
- une couche externe de protection (11), transparente pour les ondes électromagnétiques, notamment les ondes infra-rouges
ce grâce à quoi, après gonflage sous pression de l'espace libre (12) qui sépare les deux feuilles composites (2) et qui est traversé par la multiplicité de brins souples (3), on constitue un panneau rigide thermiquement isolant de très grande efficacité.

2. Panneau selon la revendication 1, caractérisé en ce que les brins souples (3) traversent la couche fibreuse (7) et en ce que les extrémités des brins souples sont retenues dans la couche (8) de polymère d'enduction.

3. Panneau selon la revendication 2, caractérisé en ce que les brins souples (3) sont constitués par au moins un fil souple (13) continu plié en zig-zag d'une feuille souple à l'autre en formant, de chaque côté, des boucles (14) traversées par au moins un fil de trame (15), les boucles et les fils de trame étant noyés dans la couche (8) du polymère d'enduction.

4. Panneau selon l'une quelconque des revendications 1 à 3, caractérisé en ce que les couches de protection sont constituées en un polyimide.

5. Panneau selon l'une quelconque des revendications 1 à 4, caractérisé en ce que la feuille métallique est en aluminium ou en argent.

6. Panneau selon l'une quelconque des revendications 1 à 5, caractérisé en ce que le polymère d'enduction est un caoutchouc synthétique thermoplastique.

7. Panneau selon l'une quelconque des revendications 1 à 6, caractérisé en ce que la couche fibreuse (7) est tissée.

8. Panneau selon l'une quelconque des revendications 1 à 6, caractérisé en ce que la couche fibreuse (7) est non tissée.

9. Panneau selon l'une quelconque des revendications 1 à 8, caractérisé en ce que la couche fibreuse (7) est ignifugée.

10. Procédé pour réaliser une structure thermiquement isolante constituée selon l'une quelconque des revendications 1 à 9, comportant plusieurs panneaux inclinés les uns par rapport aux autres,
caractérisé en ce qu'il comprend les étapes suivantes :
- on réalise une première forme à plat (17) de ladite structure, en solidarisant l'une sur l'autre
. une couche interne de protection (4) transparente pour les ondes électromagnétiques, notamment les ondes infra-rouges,
. une feuille mince (5) d'un métal réfléchissant les ondes électromagnétiques, notamment les ondes infra-rouges,
. une couche de protection (6) de la feuille métallique, et
. une couche fibreuse (7) assurant la tenue mécanique,
- on réalise une seconde forme à plat ayant la même configuration que la première forme, mais en inversant l'ordre des couches,
- on superpose les deux formes à distance l'une de l'autre, les couches internes de protection (4) se faisant face, et on met en place une multiplicité de liens souples (3) entre les deux formes, les liens souples étant retenus au-delà des couches fibreuses (7), en prévoyant des réserves aux emplacements (18) des futures pliures,
- on dépose une couche étanche (8) d'un polymère d'enduction sur chaque couche fibreuse (7) en y noyant les extrémités des susdits liens souples (3),
- on revêt chaque face d'une couche (9) de protection d'une feuille métallique, puis d'une feuille mince (10) d'un métal réfléchissant les ondes électromagnétiqués, notamment les ondes infra-rouges,
- on plie par panneaux la feuille plane composite ainsi constituée et on assemble les bords jointifs desdits panneaux pour obtenir une structure intermédiaire, et enfin
- on revêt la structure intermédiaire, intérieurement et extérieurement, de deux couches (11) respectives de protection transparentes pour les ondes électromagnétiques, notamment les indes infra-rouges.

11. Procédé selon la revendication 10, caractérisé en ce qu'on fixe, ensuite, des renforts d'angle extérieurs et/ou intérieurs.

12. Procédé selon la revendication 10 ou 11, caractérisé en ce que, pour réaliser la multiplicité des liens souples (3), on tisse au moins un fil (13) selon une configuration approximative en zig-zag, en formant au-delà des couches fibreuses des boucles (14) traversées par au moins un fil de trame (14), les boucles et les fils de trame respectifs étant noyés dans les couches de polymère d'enduction.

## Patentansprüche

1. Im wesentlichen steifes, thermisch isolierendes Paneel (1), dadurch gekennzeichnet, dass es aus mindestens zwei im wesentlichen elastischen Verbundblättern (2) gebildet ist, welche mittels einer Vielzahl elastischer Fasern (3) verstrebt sind, die so angeordnet sind, dass im gas- bzw. luftgefüllten Zustand die beiden Verbundblätter (2) im Abstand voneinander und in vorgegebenen Positionen relativ zueinander gehalten sind, wobei jedes Verbundblatt (2) von der Mitte nach außen folgende Schichten aufweist:
- eine innen liegende und für die elektromagnetischen Wellen, insbesondere Wellen im Infrarotbereich, durchlässige Schutzschicht (4),
- eine dünne Folie (5) aus einem die elektromagnetischen Wellen, insbesondere Wellen im Infrarotbereich, reflektierenden Metall, und
- eine Schicht (6) zum Schutz der Metallfolie,
- eine Faserlage (7), welche den mechanischen Halt des Blattes gewährleistet,
- eine Lage (8) aus einem Polymer zur Beschichtung, welche die Dichtigkeit gewährleistet,
- eine Schutzschicht (9) für eine darunter liegende Metallfolie,
- eine dünne Folie (10) aus einem die elektromagnetischen Wellen, insbesondere Wellen im Infrarotbereich, reflektierenden Metall, und
- eine außen liegende und für die elektromagnetischen Wellen, insbesondere Wellen im Infrarotbereich, durchlässige Schutzschicht (11),
wodurch nach Befüllung des freien Raumes (12), welcher die beiden Verbundblätter (2) trennt und durch welchen die Vielzahl elastischer Fasern (3) verläuft, unter Druck mit einem Gas bzw. mit Luft ein steifes Paneel mit sehr hoch wirksamer Wärmeisolierung entsteht.

2. Paneel nach Anspruch 1, dadurch gekennzeichnet, dass die elastischen Fasern (3) durch die Faserlage (7) hindurch geführt sind, und dass die Enden der elastischen Fasern in der Lage (8) aus einem Polymer zur Beschichtung gehalten sind.

3. Paneel nach Anspruch 2, dadurch gekennzeichnet, dass die elastischen Fasern (3) aus mindestens einer kontinuierlichen elastischen Faser (3) bestehen, welche von einem elastischen Blatt zum nächsten zickzackförmig umgelegt sind und dabei von jeder Seite aus Schlaufen (14) bilden, durch welche mindestens ein Eintragfaden (15) hindurch gerührt ist, wobei die Schlaufen (14) und die Eintragfäden in die Lage (8) aus einem Polymer zur Beschichtung eingebettet sind.

4. Paneel nach einem der Ansprüche 1 bis 3, dadurch gekennzeichnet, dass die Schutzschichten aus einem Polyimid bestehen.

5. Paneel nach einem der Ansprüche 1 bis 4, dadurch gekennzeichnet, dass die Metallfolie aus Aluminium oder Silber besteht.

6. Paneel nach einem der Ansprüche 1 bis 5, dadurch gekennzeichnet, dass das Polymer zur Beschichtung ein thermoplastischer synthetischer Kautschuk ist.

7. Paneel nach einem der Ansprüche 1 bis 6, dadurch gekennzeichnet, dass die Faserlage (7) gewebt ist.

8. Paneel nach einem der Ansprüche 1 bis 6, dadurch gekennzeichnet, dass die Faserlage (7) ein Vliesmaterial ist.

9. Paneel nach einem der Ansprüche 1 bis 8, dadurch gekennzeichnet, dass die Faserlage feuersicher imprägniert ist.

10. Verfahren zur Herstellung einer wärmeisolierenden Konstruktion, welche nach einem der Ansprüche 1 bis 9 aufgebaut ist und welche mehrere bezüglich zueinander geneigte Paneele umfasst,
dadurch gekennzeichnet, dass es die folgenden Schritte aufweist:
- es wird eine erste flache Form (17) der Konstruktion dadurch gebildet, dass miteinander
. eine innen liegende und für die elektromagnetischen Wellen, insbesondere die Wellen im Infrarotbereich, durchlässige Schutzschicht,
. eine dünne Folie (5) aus einem die elektromagnetischen Wellen, insbesondere Wellen im Infrarotbereich, reflektierenden Metall,
. eine Schicht (6) zum Schutz der Metallfolie, und
. eine Faserlage (7), welche den mechanischen Halt gewährleistet, fest aufeinander angebracht werden,
- es wird eine zweite flache Form mit derselben Ausbildung wie die erste Form, allerdings mit umgekehrter Abfolge der Schichten bzw. Lagen gebildet,
- die beiden Formen werden im Abstand voneinander übereinander angeordnet, wobei die innen liegenden Schutzschichten (4) sich einander gegenüber liegen, und es wird eine Vielzahl elastischer Bindeglieder (3) zwischen den beiden Formen angeordnet, wobei die elastischen Bindeglieder jenseits der Faserlagen (7) gehalten werden, indem an den Stellen (18), an denen die künftigen Umschläge liegen sollen, Platzreserven vorgesehen werden,
- es wird auf jede Faserlage (7) eine dichte Lage (8) aus einem Polymer zur Beschichtung aufgelegt, wobei die Enden der elastischen Bindeglieder (3) darin eingebettet werden,
- jede Fläche einer Schutzschicht (9) zum Schutz einer Metallfolie und anschließend mit einer dünnen Folie (10) aus einem die elektromagnetischen Wellen, insbesondere Wellen im Infrarotbereich, reflektierenden Metall überzogen,
- das auf diese Weise gebildete flächige Verbundblatt wird zu Paneelen gebogen und die aneinander stoßenden Ränder der Paneele werden zur Bildung einer Zwischenkonstruktion miteinander verbunden, und schließlich
- wird die Zwischenkonstruktion innen und außen mit zwei jeweiligen Schutzschichten (11) überzogen, welche für die elektromagnetischen Wellen, insbesondere Wellen im Infrarotbereich, durchlässig sind.

11. Verfahren nach Anspruch 10, dadurch gekennzeichnet, dass anschließend Verstärkungen an den außen und/oder innen liegenden Winkeln befestigt werden.

12. Verfahren nach Anspruch 10 oder 11, dadurch gekennzeichnet, dass zur Ausbildung der Vielzahl elastischer Bindeglieder (3) mindestens eine Faser (13) entsprechend einer in etwa zickzackförmigen Ausbildung eingewebt wird, wobei jenseits der Faserlagen Schlaufen (14) gebildet werden, durch welche mindestens ein Eintragfaden (15) hindurch geführt wird, und wobei die jeweiligen Schlaufen (14) und die Eintragfäden in die Lagen aus einem Polymer zur Beschichtung eingebettet sind.

## Claims

1. A substantially rigid, thermally insulating panel (1), characterized by consisting of at least two substantially flexible composite sheets (2) braced by a plurality of flexible ties (3) arranged so that in an inflated state said two composite sheets (2) are held apart and in predetermined positions one with respect to the other, each composite sheet (2) comprising, from the center toward the outside:
- an internal protective sheet (4), transparent to electromagnetic waves, especially infrared waves,
- a thin sheet (5) of a metal reflecting electromagnetic waves, especially infrared waves,
- a protective layer (6) for protecting said metal sheet,
- a fibrous layer (7) providing the sheet with mechanical strength,
- a proof layer (8) of a coating polymer providing proofing,
- a protective layer (9) for protecting an underlying metal sheet,
- a thin sheet (10) of a metal reflecting electromagnetic waves, especially infrared waves, and
- an outer protective layer (11) transparent to electromagnetic waves, especially infrared waves,
whereby, after the empty space (12) separating said two composite sheets (2) and through which said plurality of flexible ties (3) pass is inflated under pressure, a thermally insulating rigid panel is obtained having a very high efficiency.

2. The panel according to claim 1, characterized by that said flexible ties (3) pass through said fibrous layer (7) and that the ends of said flexible ties are held in the polymeric coating layer (8).

3. The panel according to claim 2, characterized by that said flexible ties (3) consist of at least one continuous flexible wire (3) bend into a zigzag pattern from one flexible sheet to the other and forming, on each side, loops (14) through which at least one weft wire (15) passes, said loops and said weft wires being embedded in said polymeric coating layer (8).

4. The panel according to anyone of claims 1 to 3, characterized by that said protective layers consist of a polyimide.

5. The panel according to anyone of claims 1 to 4, characterized by that said metal sheet is made of aluminium or of silver.

6. The panel according to anyone of claims 1 to 5, characterized by that said coating polymer is a thermoplastic synthetic rubber.

7. The panel according to anyone of claims 1 to 6, characterized by that said fibrous layer (7) is woven.

8. The panel according to anyone of claims 1 to 6, charcterized by that said fibrous layer (7) is nonwoven.

9. The panel according to anyone of claims 1 to 8, characterized by that said fibrous layer (7) is fireproofed.

10. A method for producing a thermally insulating structure provided according to anyone of claims 1 to 9, including several panels inclined with respect to each other,
characterized by that it comprises following steps:
- a first flattened-out form (17) of said structure is produced, by fixing one over the other
. an internal protective layer (4) transparent to electromagnetic waves, especially infrared waves,
. a thin sheet (5) of a metal reflecting electromagnetic waves, especially infrared waves,
. a protective layer (6) for protecting said metal sheet, and
. a fibrous layer (7) providing a mechanical strength,
- a second flattened-out form having the same design as the first form, but with the layers in reverse order, is produced,
- the two forms are superimposed some distance apart, the internal protective layers (4) facing one another, and a plurality of flexible ties (3) are disposed between said two forms, said flexible ties being held beyond said fibrous layers (7) with spaces left at the sites (18) of future folds,
- a proofing layer (8) of a coating polymer is deposited on each fibrous layer (7), thereby embedding the ends of said flexible ties (3) therein,
- each face of each protective layer (9) is covered with a metal sheet, then with a thin sheet (10) of a metal reflecting electromagnetic waves, especially infrared waves,
- the thus obtained composite flat sheet is folded by panels and the corresponding edges of said panels are joined together in order to obtain an intermediate structure, and finally
- said intermediate structure is covered on the inside and on the outside with two respective protective layers (11) which are transparent to electromagnetic waves, especially infrared waves.

11. The method according to claim 10, characterized by that external and/or internal corner reinforcements are then attached.

12. The method according to claim 10 or 11, characterized by that, in order to provide said plurality of flexible ties (3), at least one wire (13) is woven in an approximately zigzag pattern, thereby providing, beyond said fibrous layers, loops (14) through which at least one weft wire (15) passes, said respective loops and weft wires being embedded in said polymeric coating layers.
